# FASCICULE DE BREVET EUROPEEN

(11) **EP 2 181 364 B1**
(45) Date de publication et mention de la délivrance du brevet: **20.05.2015**
(21) Numéro de dépôt: 08830637.8
(22) Date de dépôt: 07.07.2008
(51) Int. Cl.: G05B 9/02, G05B 23/02, F02K 1/76

(54) **PROCEDE ET SYSTEME DE COMMANDE D'AU MOINS UN ACTIONNEUR DE CAPOTS D'UN INVERSEUR DE POUSSEE POUR TURBOREACTEUR**
VERFAHREN UND SYSTEM ZUR STEUERUNG MINDESTENS EINES AKTUATORS FÜR DIE COWLINGS EINES TURBOSTRAHLMOTOR-SCHUBUMKEHRERS
METHOD AND SYSTEM FOR CONTROLLING AT LEAST ONE ACTUATOR FOR THE COWLINGS OF A TURBOJET ENGINE THRUST REVERSER

(30) Priorité: 20.08.2007 FR 0705927
(43) Date de publication de la demande: 05.05.2010
(73) Titulaire: Aircelle, 76700 Gonfreville l'Orcher (FR)
(72) Inventeur: MAALIOUNE, Hakim, F-78630 Orgeval (FR)
(74) Mandataire: Verriest, Philippe
(86) Numéro de dépôt international: PCT/FR2008/000976
(87) Numéro de publication internationale: WO 2009/034245

(56) Documents cités:
- EP-A- 0 843 089
- EP-A- 1 413 735
- FR-A- 2 872 223
- US-A1- 2005 114 090
- US-A1- 2006 125 433

## Description

La présente invention se rapporte à un système et à un procédé de commande d'au moins un actionneur de capots d'un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

Cependant, les actionneurs électromécaniques présentent également plusieurs inconvénients qu'il est nécessaire de résoudre pour profiter pleinement des avantages qu'ils apportent en termes de gain de masse et d'encombrement.

En particulier, les actionneurs électromécaniques nécessitent l'utilisation d'un système électrique complet comprenant les actionneurs, des composant de puissance et de contrôle, ainsi que des capteurs, l'ensemble de ces éléments pouvant présenter des pannes.

Il est d'usage en cas de panne de l'un des composants de ce système de rendre le système indisponible, l'inverseur de poussée ne pouvant plus être utilisé au niveau de performances requis par son cahier des charges.

Le document US 2006/0125433 décrit également un système de commande selon l'art antérieur.

La présente invention a pour but de diminuer la fréquence des indisponibilités du système.

A cet effet, la présente invention a pour objet un système de commande d'au moins un actionneur de capot d'un inverseur de poussée pour turboréacteur d'un aéronef comprenant un ensemble de composants d'actionnement et de contrôle comportant au moins :
- au moins un actionneur de capot entraîné par au moins un moteur électrique,
- des moyens de commande de l'actionneur et du moteur électrique,
- des moyens de communication entre les moyens de commande et un système de commande de l'aéronef,
les moyens de commande sont agencés pour détecter une panne d'un composant d'actionnement et de contrôle, ledit système étant caractérisé en ce que les moyens de commande sont en outre agencés pour déterminer le caractère bloquant ou non bloquant de la panne pour le fonctionnement du système et, en cas de panne non bloquante, pour passer d'un mode de fonctionnement normal à un mode de fonctionnement d'accommodation de panne dans lequel la panne du composant d'actionnement et de contrôle est compensée au moins partiellement par une commande modifiée des autres composants d'actionnement et de contrôle, en ce que le système comprend au moins un capteur de position d'un capot d'inverseur ou de la position d'un actionneur de capot d'inverseur utilisé pour réaliser un asservissement de la commande des actionneurs, dans lequel, en cas de panne non bloquante des capteurs, les moyens de commande réalisent une commande modifiée en abaissant le couple et/ou la vitesse du moteur, et en ce que les moyens de contrôle détectent la fin de la course du capot par une hausse du couple moteur et/ou une hausse du courant moteur.

Grâce aux dispositions selon l'invention, le système peut être reconfiguré en temps réel, et continuer à fonctionner lorsque la panne détectée n'est pas bloquante pour la fonction considérée.

La prise en compte de l'état du système pour actionner l'inverseur permet de réaliser un actionnement en mode dégradé qui préserve la sécurité d'utilisation du système lorsque la panne détectée n'est pas bloquante.

Ces dispositions permettent donc d'augmenter la disponibilité du système et donc de l'inverseur actionné électriquement.

Ces dispositions rendent l'ouverture et la fermeture de l'inverseur plus lente, mais permettent son utilisation malgré la panne de capteur.

L'actionnement à basse vitesse évite d'endommager la structure en absence d'information de position.

Selon un mode de réalisation, en cas de panne partielle d'alimentation électrique du système ou d'un étage de puissance du système, les moyens de commande réalisent une commande modifiée du moteur de façon à diminuer l'intensité du moteur de façon à ne pas dépasser une intensité limite susceptible de provoquer une coupure de l'alimentation.

Ces dispositions rendent l'ouverture et la fermeture de l'inverseur plus lente, mais permettent son utilisation malgré la panne d'alimentation.

Selon un mode de réalisation, en cas de panne du moteur, les moyens de commande réalisent une commande modifiée pour l'ouverture de l'inverseur consistant à débloquer au moins un verrou du capot, l'ouverture du capot étant réalisée par un effet aérodynamique.

Avantageusement, les moyens de commande opèrent une détection du sens de déplacement de l'actionneur et/ou du capot sous l'effet des efforts aérodynamiques pour bloquer le mouvement dans le sens d'une fermeture par le frein du moteur.

Selon un mode de réalisation, le système comprend des moyens d'avertissement d'un utilisateur lorsque le système est en mode de fonctionnement d'accommodation de panne.

Ces dispositions permettent d'avertir un utilisateur, par exemple le pilote, que la performance de l'inverseur sera légèrement dégradée.

La présente invention a également pour objet un procédé de commande d'au moins un actionneur de capots d'un inverseur de poussée comprenant les étapes consistant à :
- réaliser une détection de panne sur un système de commande de l'actionneur comprenant au moins un capteur de position d'un capot d'inverseur ou de la position d'un actionneur de capot d'inverseur utilisé pour réaliser un asservissement de la commande des actionneurs,
- déterminer le caractère bloquant ou non bloquant de la panne,
- réaliser un choix d'un mode d'accommodation de panne en fonction d'une panne non bloquante détectée du ou des capteurs, dans le cas ou la panne n'est pas bloquante,
- appliquer le mode d'accommodation de panne choisi tout en réalisant une commande modifiée en abaissant le couple et/ou la vitesse du moteur.

De toute façon, l'invention sera bien comprise à l'aide de la description qui suit, en référence au dessin schématique annexé représentant, à titre d'exemple non limitatif, une forme d'exécution de ce système.
La figure 1 est une vue schématique partielle en perspective d'une nacelle intégrant un inverseur de poussée à grille.
La figure 2 est une représentation schématique des capots mobiles et de leur système d'actionnement.
La figure 3 est une représentation schématique du système de commande des actionneurs des capots mobiles.

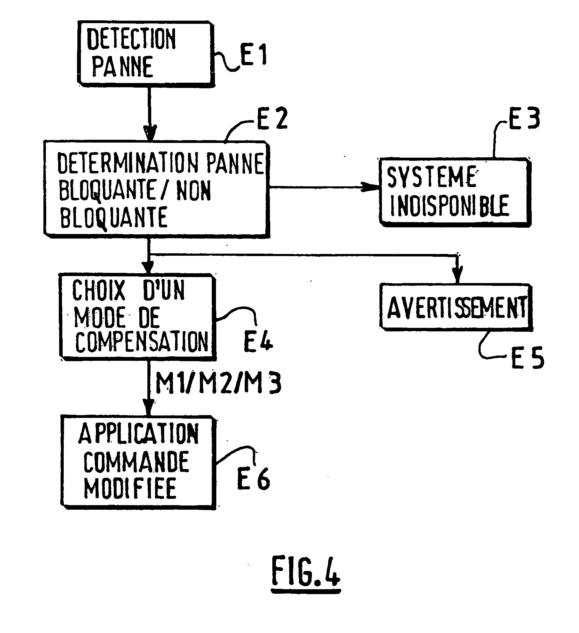

La figure 4 est un organigramme d'un procédé selon l'invention.

Avant de décrire en détail un mode de réalisation de l'invention, il est important de préciser que le procédé et le système décrit n'est pas limité à un type d'inverseur en particulier. Bien qu'illustrée par un inverseur à grilles, l'invention pourra être mise en oeuvre avec des inverseurs de conception différentes, notamment à portes.

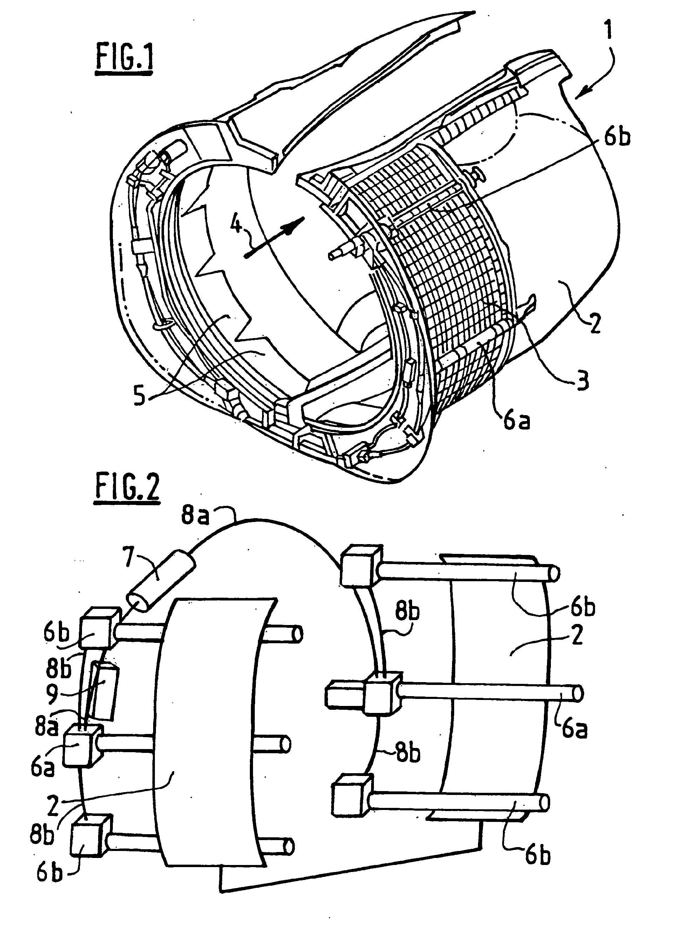

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à des moyens de commande 9, comprenant un microcontrôleur. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Selon une variante non représentée, seuls deux vérins haut et bas sont utilisés pour chaque capot, actionnés par un moteur électrique unique relié à une interface de commande. La puissance délivrée par le moteur électrique est distribuée aux deux vérins haut et bas par l'intermédiaire de deux arbres de transmission flexibles 8a.

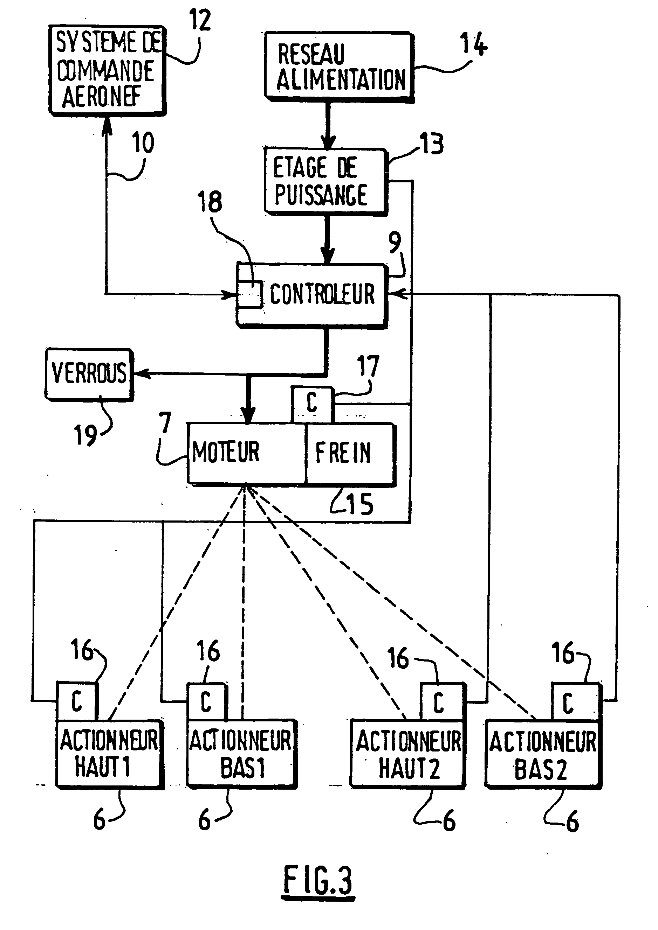

La figure 3 montre schématiquement un système de commande de l'actionnement de deux capots avec pour chaque capot deux actionneurs haut et bas.

Ainsi que représenté sur la figure 3 un système de commande des actionneurs d'un inverseur de poussée selon l'invention comprend des moyens de commande constitués par un microcontrôleur 9.

Ce microcontrôleur est relié par des moyens de communication 10 au système de commande 12 de l'aéronef.

Le système de commande comprend également un étage de puissance 13 relié au réseau d'alimentation 14 de l'aéronef.

Le microcontrôleur 9 permet la commande d'un moteur électrique 7 et des vérins ou actionneurs 6 comme décrit précédemment. Le moteur comporte également un frein 15 commandé également par le microcontrôleur 9.

Certains des actionneurs 6 sont équipés de capteurs de position 16 permettant de connaître le déplacement de l'actionneur 6 entre la position ouverte et fermée. De la même façon, le moteur et/ou le frein sont équipés de capteurs de position 17 qui permettent également de connaître le sens de déplacement des actionneurs 6 et donc des capots 2.

Le système comprend également des moyens d'avertissement d'un utilisateur lorsque le système est dans un mode de fonctionnement d'accommodation de panne comme décrit ci-dessous, qui sont constitués d'une simple interface 18, utilisant les moyens de communication 10, avec le système de commande 12 de l'aéronef qui lui-même avertit le pilote.

Le microcontrôleur 9 commande également l'ouverture et la fermeture d'un verrou du capot 19, appelé verrou primaire. Ce verrou empêche l'ouverture non désirée du capot 2.

Le microcontrôleur 9 est agencé pour détecter une panne d'un composant d'actionnement et/ou de contrôle, pour déterminer le caractère bloquant ou non bloquant de la panne pour le fonctionnement du système et, en cas de panne non bloquante, pour passer d'un mode de fonctionnement normal à un mode de fonctionnement d'accommodation de panne dans lequel la défaillance du composant est compensée au moins partiellement par une commande modifiée des autres composants d'actionnement et/ou de contrôle.

Les types de pannes principaux pouvant intervenir dans le système et être compensés par le passage à un mode d'accommodation de panne sont des pannes de capteur 17, 16, des pannes du moteur 7, ou des pannes partielles d'alimentation.

Un premier mode M1 d'accommodation de panne concerne une panne des capteurs de position 16 d'un capot d'inverseur 2.

L'information de position du capot 2 est utilisée pour réaliser un asservissement de la commande de l'actionneur. En particulier, la vitesse d'ouverture ou de fermeture est variable suivant la position du capot 2, la vitesse diminuant à l'approche de la butée.

En cas de panne et donc d'absence d'information de position du capot 2, dans le mode d'accommodation de panne M1, le microcontrôleur 9 réalise une commande modifiée en abaissant le couple et/ou la vitesse du moteur 7 et en détectant la fin de la course par une hausse du couple moteur et/ou une hausse du courant moteur.

Un second mode d'accommodation de panne M2 concerne en plus une panne partielle de l'étage de puissance 13 ou une panne partielle provenant du réseau d'alimentation 14. En particulier, une panne connue est la perte de l'une des phases du courant triphasé d'alimentation.

Dans ce cas, le microcontrôleur 9 réalise en plus une commande modifiée du moteur 7 sur deux phases en diminuant le couple du moteur 7 et donc l'intensité du courant dans le moteur 7 de façon à ne pas dépasser une intensité limite susceptible de provoquer une coupure de l'alimentation 14.

En effet, le réseau d'alimentation 14 présente un dispositif de sécurité, constitué par un disjoncteur, qui coupe l'alimentation lorsqu'une intensité trop forte est demandée par une charge reliée à cette alimentation.

Un troisième mode d'accommodation de panne M3 concerne une panne du moteur.

Dans ce cas, le microcontrôleur 9 réalise en plus une commande modifiée pour l'ouverture du capot 2 de l'inverseur consistant à débloquer au moins un verrou 19 du capot et mettre en « roue libre » le moteur 7, c'est-à-dire désactiver le frein 15 du moteur. Les effets aérodynamiques conduisent dans ce cas à l'ouverture du capot 2 de l'inverseur.

Le microcontrôleur 9 opère une détection du sens de déplacement de l'actionneur et/ou du capot sous l'effet des efforts aérodynamiques pour bloquer le mouvement dans le sens d'une fermeture par le frein 15 du moteur si un tel mouvement était détecté.

Un diagramme résumant les étapes d'un procédé selon l'invention est représenté à la figure 3.

Dans une première étape E1, on réalise une détection de panne sur le système. Dans une seconde étape E2, une détermination du caractère bloquant ou non bloquant de la panne est réalisée. Si la panne est bloquante, le système signale son indisponibilité dans une troisième étape E3.

Dans le cas contraire, un choix d'un mode d'accommodation M1, M2, M3 de panne est réalisé dans une quatrième étape E4 en fonction du type de panne non bloquante détectée.

Dans une dernière étape E5, le mode d'accommodation M1, M2, M3 de panne est appliqué.

Il est à noter que le procédé de commande décrit ci-dessus peut être programmé par des moyens logiciels sur le calculateur.

Comme il va de soi, l'invention ne se limite pas à la seule forme d'exécution du système, décrite ci-dessus à titre d'exemple, mais elle embrasse au contraire toutes les variantes.

## Revendications

1. Système de commande d'au moins un actionneur (6) de capots (2) d'un inverseur de poussée pour turboréacteur d'un aéronef comprenant un ensemble de composants d'actionnement et de contrôle comportant au moins :
- au moins un actionneur (6) de capot (2) entraîné par au moins un moteur électrique (7),
- des moyens de commande (9) de l'actionneur et du moteur électrique (7),
- des moyens de communication (10) entre les moyens de commande (9) et un système de commande de l'aéronef (12),
les moyens de commande (9) sont agencés pour détecter une panne d'un composant d'actionnement et de contrôle (7, 16, 13),
ledit système étant **caractérisé en ce que**
les moyens de commande (9) sont en outre agencés pour déterminer le caractère bloquant ou non bloquant de la panne pour le fonctionnement du système et, en cas de panne non bloquante, pour passer d'un mode de fonctionnement normal à un mode de fonctionnement d'accommodation de panne (M1, M2, M3) dans lequel la panne du composant d'actionnement et de contrôle (7, 16, 13) est compensée au moins partiellement par une commande modifiée des autres composants d'actionnement et de contrôle (7, 16, 13),
**en ce que** le système comprend au moins un capteur de position (16) d'un capot d'inverseur ou de la position d'un actionneur de capot d'inverseur utilisé pour réaliser un asservissement de la commande des actionneurs (6), dans lequel, en cas de panne non bloquante des capteurs (16), les moyens de commande (9) réalisent une commande modifiée en abaissant le couple et/ou la vitesse du moteur (7),
et **en ce que** lequel les moyens de contrôle (9) détectent la fin de la course du capot (2) par une hausse du couple moteur et/ou une hausse du courant moteur.

2. Système selon la revendication 1, dans lequel en cas de panne partielle d'alimentation électrique du système ou d'un étage de puissance (13) du système, les moyens de commande (9) réalisent une commande modifiée du moteur (7) de façon à diminuer l'intensité du moteur de façon à ne pas dépasser une intensité limite susceptible de provoquer une coupure de l'alimentation.

3. Système selon l'une des revendications 1 ou 2, dans lequel, en cas de panne du moteur (7), les moyens de commande (9) réalisent une commande modifiée pour l'ouverture de l'inverseur consistant à débloquer au moins un verrou (19) du capot (2), l'ouverture du capot (2) étant réalisée par un effet aérodynamique.

4. Système selon la revendication 3, dans lequel les moyens de commande (9) opèrent une détection du sens de déplacement de l'actionneur (6) et/ou du capot (2) sous l'effet des efforts aérodynamiques pour bloquer le mouvement dans le sens d'une fermeture par le frein du moteur (15).

5. Système selon l'une des revendications précédentes, comprenant des moyens d'avertissement (18) d'un utilisateur lorsque le système est en mode de fonctionnement d'accommodation de panne.

6. Procédé de commande d'au moins un actionneur de capots d'un inverseur de poussée pour turboréacteur comprenant les étapes consistant à :
- réaliser (E1) une détection de panne sur un système de commande de l'actionneur comprenant au moins un capteur de position (16) d'un capot d'inverseur ou de la position d'un actionneur de capot d'inverseur utilisé pour réaliser un asservissement de la commande des actionneurs (6),
- déterminer (E2) le caractère bloquant ou non bloquant de la panne,
- réaliser un choix (E4) d'un mode d'accommodation de panne (M1, M2, M3) en fonction d'une panne non bloquante détectée du ou des capteurs, dans le cas ou la panne n'est pas bloquante,
- appliquer (E5) le mode d'accommodation de panne choisi (M1, M2, M3) tout en réalisant une commande modifiée en abaissant le couple et/ou la vitesse du moteur (7).

7. Procédé selon la revendication 6, comprenant de plus l'étape consistant à avertir un utilisateur lorsque le système est en mode de fonctionnement d'accommodation de panne.

## Patentansprüche

1. System zum Steuern zumindest eines Stellglieds (6) von Kappen (2) einer Schubumkehr für ein Turbotriebwerk eines Luftfahrzeugs, eine Reihe von Komponenten zum Betätigen und Steuern umfassend, die folgendes umfassen:
- zumindest ein Stellglied (6) von Kappen (2), das von zumindest einem Elektromotor (7) angetrieben wird,
- Mittel zum Steuern (9) des Stellglieds und des Elektromotors (7),
- Mittel zum Kommunizieren (10) zwischen den Mitteln zum Steuern (9) und einem Steuersystem des Luftfahrzeugs (12),
die Mittel zum Steuern (9) sind angeordnet, um eine Panne einer Komponente zum Betätigen und Steuern (7, 16, 13) zu erkennen,
wobei das besagte System **dadurch gekennzeichnet ist, dass**
die Mittel zum Steuern (9) darüber hinaus angeordnet sind, um den blockierenden oder nicht blockierenden Charakter der Panne für den Betrieb des Systems zu bestimmen, und um, im Falle einer nicht blockierenden Panne, von einem normalen Betriebsmodus in einen der Panne angepassten Betriebsmodus (M1, M2, M3) überzugehen, in dem die Panne der Komponente zum Betätigen und Steuern (7, 16, 13) zumindest teilweise durch eine modifizierte Steuerung der anderen Komponenten zum Betätigen und Steuern (7, 16, 13) kompensiert wird,
dadurch, dass das System zumindest einen Positionssensor (16) einer Schubumkehrkappe oder für die Position eines Stellglieds einer Schubumkehrkappe umfasst, der verwendet wird, um eine Ansteuerung der Steuerung der Stellglieder (6) auszuführen, bei der die Mittel zum Steuern (9) im Falle einer nicht blockierenden Panne der Sensoren (16) eine veränderte Steuerung ausführen, indem sie das Moment und/ oder die Geschwindigkeit des Motors (7) verringern.

2. System nach Anspruch 1, wobei die Mittel zum Steuern (9) im Falle eines Teilausfalls der Stromversorgung des Systems oder einer Leistungsstufe (13) des Systems eine veränderte Steuerung des Motors (7) durchführen, sodass der Motorstrom gesenkt wird, um den Stromgrenzwert nicht zu überschreiten, bei dem eine Unterbrechung der Stromversorgung eintreten kann.

3. System nach einem der Ansprüche 1 oder 2, wobei die Mittel zum Steuern (9) im Falle einer Motorpanne (7) eine veränderte Steuerung zum Öffnen der Schubumkehr durchführen, die darin besteht, zumindest einen Riegel (19) der Kappe (2) zu lösen, wobei das Öffnen der Kappe (2) durch eine aerodynamische Wirkung erfolgt.

4. System nach Anspruch 3, wobei die Mittel zum Steuern (9) eine Erkennung der Bewegungsrichtung des Stellglieds (6) und/ oder der Kappe (2) unter Einwirkung von aerodynamischen Kräften durchführen, um die Bewegung in Richtung einer Schließung durch die Bremse des Motors (15) zu blockieren.

5. System nach einem der vorherigen Ansprüche, Mittel zum Warnen (18) eines Benutzers umfassend, wenn sich das System in einem der Panne angepassten Betriebsmodus befindet.

6. Verfahren zum Steuern zumindest eines Stellglieds von Kappen einer Schubumkehr für ein Turbotriebwerk, die folgenden Schritte umfassend:
- Durchführen (E1) einer Erkennung einer Panne an einem System zum Steuern des Stellglieds, zumindest einen Positionssensor (16) einer Schubumkehrkappe oder für die Position eines Stellglieds einer Schubumkehrkappe umfassend, der verwendet wird, um eine Ansteuerung der Steuerung der Stellglieder (6) auszuführen,
- Bestimmen (E2) des blockierenden oder nicht blockierenden Charakters der Panne,
- Durchführen einer Auswahl (E4) eines der Panne angepassten Betriebsmodus (M1, M2, M3) in Abhängigkeit von einer nicht blockierenden Panne, die von dem oder den Sensoren erkannt worden ist, für den Fall, dass die Panne nicht blockierend ist,
- Anwenden (E5) des ausgewählten der Panne angepassten Betriebsmodus (M1, M2, M3) mittels Durchführung einer geänderten Steuerung durch Verringern des Moments und/ oder der Geschwindigkeit des Motors (7).

7. Verfahren nach Anspruch 6, das darüber hinaus den Schritt umfasst, der darin besteht, einen Benutzer zu warnen, wenn sich das System in dem der Panne angepassten Betriebsmodus befindet.

## Claims

1. A command system of at least one actuator (6) of cowls (2) of a thrust reverser for a turbojet engine of an aircraft comprising an assembly of actuation and control components including at least:
- at least one actuator (6) of a cowl (2) driven by at least one electrical motor (7),
- command means (9) of the actuator and the electrical motor (7),
- communication means (10) between the command means (9) and a command system of the aircraft (12),
the command means (9) are arranged to detect a failure of an actuation and control component (7, 16, 13),
said system being **characterized in that**
the command means (9) are further arranged to determine the blocking or the non-blocking character of the failure for the operation of the system and, in case of non-blocking failure, to move from a normal operating mode to a failure accommodation operating mode (M1, M2, M3) in which the failure of the actuation and control component (7, 16, 13) is compensated at least partially by a modified command of the other actuation and control components (7, 16, 13),
**in that** the system comprises at least one sensor (16) of position of a reverser cowl or of the position of an actuator of a thrust reverser cowl used to perform servo-control of the command of actuators (6), wherein, in case of non-blocking failure of the sensors (16), the command means (9) perform a modified command by lowering the torque and/or the speed of the motor (7),
and **in that** the control means (9) detect the end of travel of the cowl (2) by an increase in the motor torque and/or an increase in the motor current.

2. The system according to claim 1, wherein in case of partial failure of electrical supply of the system or of a power stage (13) of the system, the command means (9) perform a modified command of the motor (7) so as to decrease the intensity of the motor so as not to exceed a limit intensity likely to cause a supply cutoff.

3. The system according to any of claims 1 or 2, wherein, in case of failure of the motor (7), the command means (9) perform a modified command for the opening of the thrust reverser consisting in unblocking at least one lock (19) of the cowl (2), the opening of the cowl (2) being performed by an aerodynamic effect.

4. The system according to claim 3, wherein the command means (9) operate a detection of the movement direction of the actuator (6) and/or of the cowl (2) under the effect of the aerodynamic forces to block the movement in the direction of a closure by the motor (15) brake.

5. The system according to any of the preceding claims, comprising warning means (18) of a user when the system is in the failure accommodation operating mode.

6. A command method of at least one actuator of cowls of a thrust reverser for a turbojet engine comprising the steps consisting of:
- performing (E1) a failure detection on a command system of the actuator comprising at least one sensor (16) of position of a thrust reverser cowl or of the position of an actuator of a thrust reverser cowl used to perform servo-control of the command of the actuators (6),
- determining (E2) the blocking or the non-blocking character of the failure,
- performing a choice (E4) of a failure accommodation mode (M1, M2, M3) depending on a detected non-blocking failure of the sensor(s), in case the failure is not blocking,
- applying (E5) the chosen failure accommodation mode (M1, M2, M3) while performing a modified command by lowering the torque and/or the speed of the motor (7).

7. The method according to claim 6, comprising in addition the step consisting of warning a user when the system is in failure accommodation operating mode.
